**Europäisches Patentamt**

(19) **European Patent Office**

**Office européen des brevets**

(11) Numéro de publication : **0 004 266**
**B1**

(12) **FASCICULE DE BREVET EUROPÉEN**

(45) Date de publication du fascicule du brevet :
**19.05.82**

(51) Int. Cl.³ : **H 02 G   5/00**

(21) Numéro de dépôt : 78200046.7

(22) Date de dépôt : 19.06.78

(54) Ensemble-support pour jeu de barres de transport d'énergie électrique.

(30) Priorité : 02.03.78 BE 185593

(43) Date de publication de la demande :
03.10.79 (Bulletin 79/20)

(45) Mention de la délivrance du brevet :
19.05.82 Bulletin 82/20

(84) Etats contractants désignés :
**BE CH DE FR GB LU NL SE**

(56) Documents cités :
**CH - A - 486 754**
**FR - A - 776 394**
**FR - A - 1 033 243**
**FR - A - 1 559 497**

(73) Titulaire : **ATELIERS DE CONSTRUCTIONS ELECTRI-
QUES DE CHARLEROI (ACEC) Société Anonyme
54, Chaussée de Charleroi
B-1060 Bruxelles (BE)**

(72) Inventeur : **Vertongen, José
Rue de Moulin Maisse, 18
B-4400 Herstal (BE)**

(74) Mandataire : **Mahieu, Raymond
ACEC - Service des Brevets BP.4
B-6000 Charleroi (BE)**

Imprimerie Jouve, 18, rue St-Denis, 75001 Paris, France

Ensemble-support pour jeu de barres de transport d'énergie électrique

La présente invention est relative aux systèmes de distribution d'énergie électrique et concerne plus particulièrement les ensembles-supports de barres d'un jeu de barres de transport d'énergie de ces systèmes.

Suivant les techniques actuelles, les jeux de barres mono- ou polyphasés de transport d'énergie, sont supportés par différents dispositifs qui assurent également leur fixation sur une surface d'appui. Ces dispositifs peuvent, par exemple, faire usage de tubes isolants, disposés de part et d'autre des barres, dans lesquels sont découpées des entailles destinées à recevoir le bord desdites barres, les tubes isolants étant fixés sur des pièces solidaires de la surface d'appui. Ils peuvent également être constitués de plaques isolantes qui sont découpées suivant le profil des barres utilisées et disposées deux à deux de part et d'autre desdites barres, les plaques étant reliées entre elles et fixées sur la surface d'appui. Selon le brevet FR-A-1559497, le montage peut aussi se faire à l'aide de pièces isolantes assemblées avec les barres pour pincer les bords latéraux opposés desdites barres dans des rainures parallèles obtenues à l'assemblage, celui-ci étant réalisé sur des tiges filetées fixées sur la surface d'appui. Ces divers systèmes donnent en général toute satisfaction mais ont l'inconvénient que leurs divers composants doivent être adaptés en fonction des impératifs liés à l'installation envisagée, par exemple, le nombre de barres omnibus par phase, la section de ces barres, l'écartement entre les barres de phases différentes, l'orientation des barres par rapport à la surface d'appui, etc...

La présente invention consiste en des ensembles-supports de barres pour jeux de barres de transport d'énergie, qui sont constitués de composants normalisés permettant de faire face à tous les impératifs liés aux différentes installations habituellement rencontrées.

Suivant l'invention chacun des ensembles-supports de barres d'un jeu de barres de transport d'énergie, comprenant des éléments isolants assemblés avec les barres pour pincer les bords latéraux opposés desdites barres dans des rainures parallèles est caractérisé en ce que les éléments isolants sont chacun constitués par un bloc symétrique selon trois plans perpendiculaires, présentant sur deux de ses faces parallèles opposées des premier et deuxième groupes de rainures parallèles, les rainures d'un même groupe étant de même profondeur, disposés à 90° l'un par rapport à l'autre et permettant d'enfourcher des barres d'une première épaisseur dans le cas du premier groupe et d'une deuxième épaisseur dans le cas du deuxième groupe et traversé de part en part par des alésages d'assemblage pratiqués dans ses plans de symétrie, perpendiculairement auxdits plans, les faces parallèles opposées portant les deux groupes de rainures étant percées de deux paires des alésages d'assemblage, chacune des paires étant disposée de part et d'autre d'un groupe de rainures et les autres faces parallèles opposées étant percées d'un seul alésage central.

L'invention sera mieux comprise en se référant à la description qui va suivre et aux dessins annexés qui sont relatifs à une forme de réalisation donnée à titre d'exemple. Sur ces dessins :

La figure 1 représente des ensembles-supports de barres maintenant un jeu de barres de transport d'énergie électrique, les faces des barres étant situées dans des plans perpendiculaires à une surface d'appui.

La figure 2 représente également des ensembles-supports de barres maintenant un jeu de barres de transport d'énergie électrique, mais les faces des barres étant situées dans des plans parallèles à une surface d'appui.

La figure 3 représente une vue en perspective d'un bloc en matière isolante. Comme on le voit ce bloc est symétrique selon les trois plans perpendiculaires, disposés à mi-distance entre ses faces.

La figure 4 représente un détail d'un ensemble-support de la figure 1.

La figure 5 représente un détail d'un ensemble-support de la figure 2.

La figure 6 illustre une autre forme d'utilisation des blocs dans le cas d'un jeu de barres du type montré à la figure 2 et

La figure 7 représente une autre forme de réalisation du bloc.

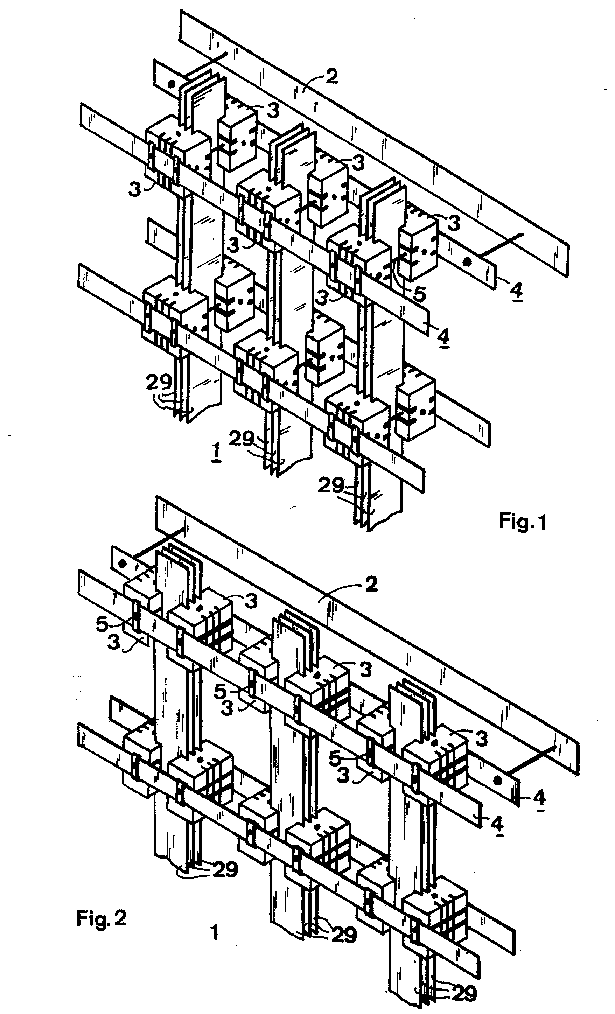

Aux figures 1 et 2, on a représenté un jeu de barres triphasé 1 constitué de barres 29 de transport d'énergie électrique, monté sur une surface d'appui 2, qui est maintenu par des ensembles supports de barres conformes à l'invention. Ces ensembles sont constitués de paires de blocs ou galettes 3 et de pièces de liaison entre galettes 4, assemblées sur les barres par des tiges filetées 5 munies d'écrous.

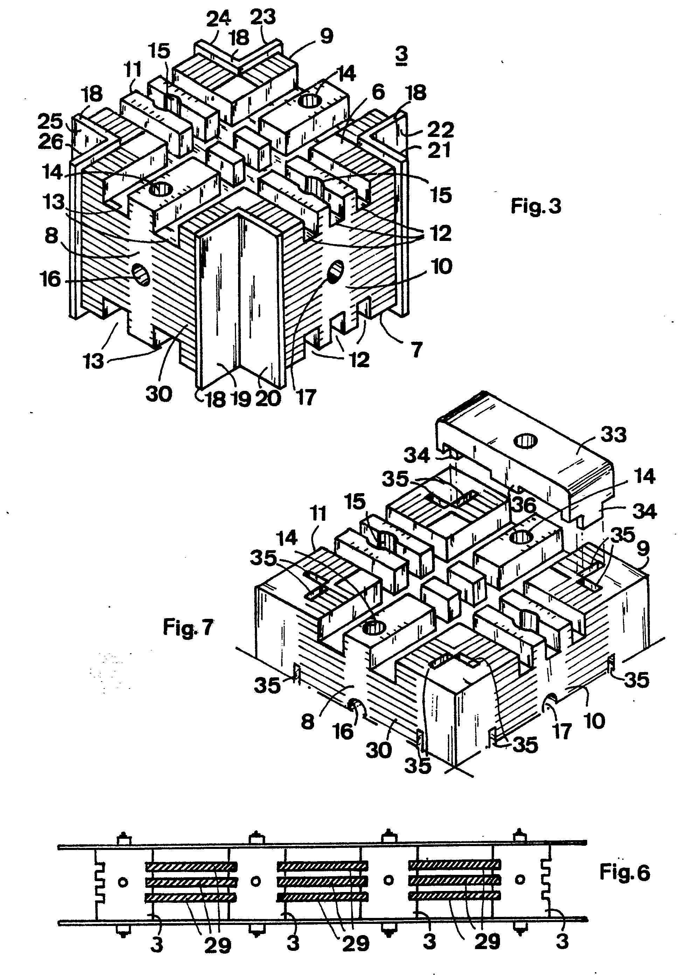

Comme montré à la figure 3, chacune des galettes de l'ensemble se présente sous la forme d'un parallélépipède droit à base carrée ayant deux grandes faces opposées 6 et 7 et des faces latérales opposées 8, 9 et 10, 11. Dans les deux plans de symétrie des grandes faces 6 et 7, respectivement parallèles aux faces latérales 8, 9 et 10, 11, sont creusés deux groupes de rainures ayant une même profondeur, et permettant d'enfourcher les barres d'une même phase, qui sont disposées parallèlement entre elles. La largeur des rainures d'un groupe est différente de celle des rainures de l'autre groupe de manière à pouvoir utiliser la galette pour des barres d'épaisseur différente. Dans la forme de réalisation illustrée aux dessins, on a prévu trois rainures 12 d'une largeur déterminée pour un des groupes de rainures et deux rainures 13 de largeur double pour l'autre groupe, ces largeurs de rainure correspondant à des épaisseurs de barre normalisées. On a donc la possibilité d'enfourcher de une à trois barres d'une épaisseur déterminée dans un sens ou de une à deux barres d'épaisseur double dans l'autre sens, suivant l'intensité du courant par phase. La distance entre rainures d'un même groupe est égale à l'épaisseur des barres à utiliser avec le groupe concerné de manière à pouvoir imbriquer facilement des dérivations. De part et d'autre du groupe des rainures 12 on a pratiqué, à une distance déterminée de celles-ci des alésages 14 dans le plan de symétrie des faces 6 et 7, parallèle aux faces latérales 10 et 11 tandis que de part et d'autre du groupe des rainures 13 on a pratiqué des alésages 15 dans l'autre plan de symétrie des mêmes faces 6 et 7, qui est parallèle aux faces latérales 8 et 9, tous ces alésages traversant de part en part les galettes et étant perpendiculaires au plan desdites rainures, c'est-à-dire auxdites faces 6 et 7. Des alésages 16 et 17 sont également pratiqués à travers la galette, dans un plan parallèle aux faces 6 et 7, l'alésage 16 étant perpendiculaire à la direction des rainures 12, c'est-à-dire aux faces 8 et 9 et l'alésage 17 étant perpendiculaire à la direction des rainures 13 c'est-à-dire aux faces 10 et 11. Pour des raisons d'économie, les coins formés par la rencontre des faces latérales sont évidés et il en résulte des petites faces latérales égales en retrait 19 à 26, dont la moitié sont parallèles aux faces 8, 9 et l'autre aux faces 10, 11. Les bords des petites faces latérales en retrait sont garnis d'une saillie formant un épaulement 18.

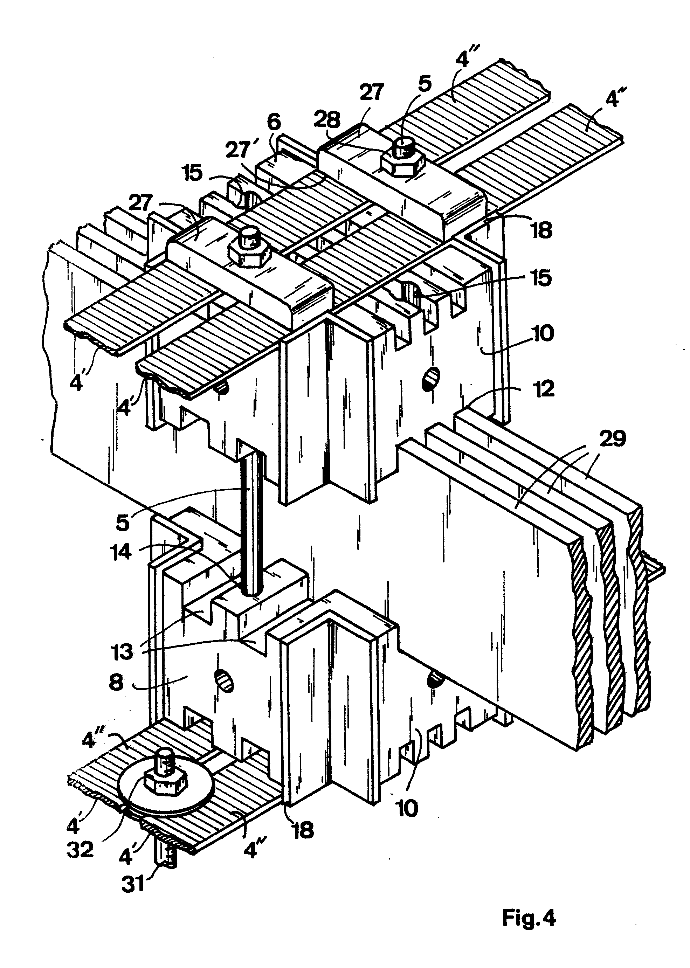

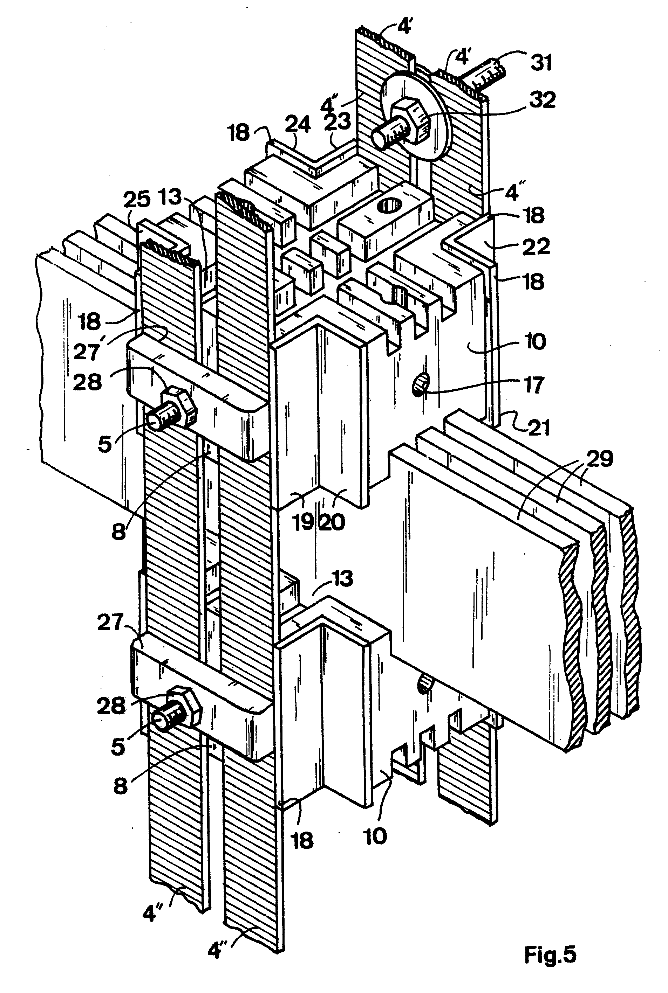

Comme on peut le voir à la figure 1 et à la figure 2, ainsi qu'aux figures 4, 5, les galettes sont disposées par paires, face à face de part et d'autre des barres d'une même phase, ces dernières étant enfoncées dans les rainures de l'un ou de l'autre groupe. Les galettes d'une même paire peuvent être assemblées sur les barres de deux façons différentes à l'aide des pièces de liaison 4 et des tiges filetées 5 associées à des écrous. Chacune des pièces de liaison peut être soit un élément rigide pourvu de perforations pour le passage des tiges filetées, soit une coulisse formée par deux éléments rigides, ménageant entre eux une ouverture permettant le passage desdites tiges filetées. Quelle que soit la forme retenue, les éléments rigides peuvent être réalisés en matériau isolant ou métallique, le seul critère entrant en ligne de compte étant la résistance mécanique nécessaire. Dans la forme de réalisation montrée aux dessins, on a utilisé comme pièces de liaison 4 des coulisses formées de deux barreaux 4'.

Une première façon d'assembler une paire de galettes sur des barres, qui correspond au montage de la figure 1, est illustrée en détail à la figure 4. Dans ce cas, des barres 29 qui sont parallèles entre elles, comme mentionné précédemment, ont leurs grandes faces perpendiculaires à la surface d'appui 2 sur laquelle le jeu de barres complet est fixé. Dans cette forme de réalisation, les barreaux 4' sont appliqués perpendiculairement à la direction des barres 29, sur la grande face des galettes non en contact avec lesdites barres qui sont, en partie, enfoncées dans les rainures 12 de la grande face opposée et deux tiges filetées 5 sont introduites dans les alésages 14 des galettes de manière à émerger au-dessus des coulisses en passant à travers l'ouverture ménagée entre les barreaux 4'. Les extrémités des tiges filetées 5 qui émergent des deux coulisses traversent des cavaliers 27 qui prennent appui sur les deux barreaux de chaque coulisse. Des écrous 28 sont vissés sur les extrémités des tiges filetées et la pression qu'ils exercent sur les cavaliers 27 assure l'assemblage des deux galettes sur les barres. Dans le cas où l'on utiliserait le groupe de deux rainures 13, les tiges filetées seraient introduites dans les alésages 15 des galettes, les barreaux ayant pivoté de 90°. La deuxième façon d'assembler une paire de galettes sur les barres 29, qui correspond au montage de la figure 2, est illustrée en détail à la figure 5. Dans ce cas, les barres 29 qui comme noté précédemment, sont parallèles entre elles, ont leurs grandes faces parallèles à la surface d'appui 2 sur laquelle est fixé le jeu de barres complet. Dans cette forme de réalisation, les barreaux 4' d'une des coulisses sont appliqués sur les deux faces latérales 8 des deux galettes de la paire et ceux de l'autre coulisse sont appliqués sur les deux faces latérales 9 de ces mêmes galettes et une tige filetée 5 est introduite dans l'alésage 16 de chaque galette, pratiqué perpendiculairement à la direction des rainures utilisées c'est-à-dire les rainures 12. En cas d'utilisation des rainures 13, les coulisses seraient appliquées sur les faces latérales 10 et 11 des deux galettes et les tiges filetées 5 seraient introduites dans les alésages 17. Les bouts de tiges filetées émergeant entre les barreaux 4' traversent comme expliqué précédemment des cavaliers 27 et reçoivent des écrous 28 qui exercent leur pression sur lesdits cavaliers pour assurer l'assemblage. Que ce soit dans l'une ou l'autre façon d'assembler les galettes, les barreaux 4' sont empêchés de se déplacer latéralement, d'une part par les épaulements 18 des bords des petites faces latérales en retrait et d'autre part par les tiges filetées qui, pour répondre aux normes relatives à la longueur des lignes de fuite sont enveloppées dans des gaines isolantes jusqu'à la sortie des galettes.

Comme indiqué aux figures 1 et 2, il suffit donc pour obtenir un ensemble support complet, de prévoir entre les pièces de liaison, en l'occurrence les coulisses formées par les barreaux 4', autant de paire de galettes qu'il y a de phases.

Quand la tension électrique en jeu le permet, il est possible, dans la deuxième façon d'assembler les paires de galettes sur les barres, de réaliser un montage tel que celui montré à la figure 6. Dans ce cas, au lieu d'utiliser une paire de galettes pour chaque phase, soit six galettes pour le jeu de barres donné en exemple, on n'utilise que quatre galettes en se servant des rainures pratiquées sur les deux grandes faces de deux des galettes pour enfourcher des barres de phases différentes.

Du fait que les barres omnibus normalisées peuvent avoir cinq ou six largeurs pour une même épaisseur, il est évident qu'avec une seule paire de galettes on couvre la plupart des impératifs liés à l'intensité du courant d'une phase. Toutefois si les diverses possibilités offertes par une seule paire de galettes ne sont pas suffisantes on peut, par exemple, prévoir une deuxième paire de galettes pinçant une autre série de barres de manière à obtenir la section totale de matériau conducteur compatible avec l'intensité du courant par phase. La deuxième paire de galettes peut, dans le montage illustré à la figure 1 et à la figure 4, être assemblée sur ses barres à côté de la première, de la même façon que celle-ci ou être montée, avec ses barres, sur la première, entre une des coulisses existantes et une troisième coulisse, l'assemblage des deux paires de galettes sur les deux séries de barres se faisant alors à l'aide de tiges filetées de longueur appropriée dont les écrous prennent appui sur les barreaux des coulisses extérieures. Il est évident que dans cette deuxième façon de faire il est possible de ne prévoir que trois galettes par phase en utilisant les deux grandes faces rainurées d'une des galettes, les trois galettes utilisées étant alors assemblées sur leurs barres par deux coulisses prenant appui sur les galettes extérieures. Dans le montage illustré à la figure 2 et à la figure 5, la deuxième paire de galettes peut être prévue sur la première, entre une coulisse existante et une troisième coulisse, les deux paires étant assemblées sur les deux séries de barres à l'aide de tiges filetées de longueur appropriée ou être prévue à côté de la première entre les coulisses existantes comme expliqué ci-dessus. Il est évident qu'il est possible, dans cette dernière façon de faire de n'utiliser que trois galettes pour maintenir les deux séries de barres.

Le nombre d'ensembles pour un jeu de barres déterminé sera choisi en fonction des sollicitations dues aux effets des courants de court-circuit. Ces sollicitations qui agissent sur les barres des différentes phases ont tendance à déplacer les galettes le long des pièces de liaison, c'est-à-dire dans le cas illustré sur les dessins, le long des coulisses. De manière à empêcher tout déplacement des galettes en cas de court-circuit, les surfaces des galettes susceptibles de venir en contact avec les barreaux, par exemple la surface 30, les deux faces 4″ des barreaux et la surface 27′ des cavaliers 27 en contact avec les barreaux, sont pourvues d'une denture ayant partout le même pas. Cette façon de faire permet d'obtenir un accrochage rigide entre les galettes et les coulisses en n'importe quel point desdites coulisses.

Pour assurer l'accrochage du jeu de barres complet sur la surface d'appui 2, les ensembles-supports de barres, ou du moins un certain nombre de ceux-ci, seront rendus solidaires de ladite surface d'appui. Pour ce faire, les tiges filetées 5 de ces ensembles peuvent se prolonger jusqu'à la surface d'appui 2 se trouvant en face d'eux et être fixées sur ladite surface à l'aide d'écrous. Il n'est évidemment pas nécessaire que toutes les tiges filetées d'un ensemble soient fixées sur la surface d'appui. Une autre façon de faire, consiste à fixer les ensembles concernés, sur des tiges filetées 31 solidaires des surfaces d'appui. Dans ce cas, l'extrémité des tiges filetées passent à travers l'ouverture de la coulisse ménagée entre les barreaux 4′ et ces derniers sont serrés entre deux écrous 32 prévus sur les tiges filetées 31.

Une autre forme de réalisation de la galette 3 illustrée à la figure 3 est montrée à la figure 7. Dans cette forme de réalisation les coins formés par la rencontre des faces latérales 8, 9, 10 et 11 ne sont plus évidés et toutes les faces sont planes c'est-à-dire sans épaulement 18. Le maintien en place des pièces de liaisons est assuré par des cavaliers 33 pourvus de rebord d'extrémités 34 qui s'enfoncent dans des « mortaises » 35 creusées dans les différentes faces de la galette, de part et d'autre des alésages 14, 15, 16 et 17. En outre, les cavaliers 27, peuvent présenter un tenon 36, traversé par le trou de passage des tiges filetées 5, qui s'insère entre les barreaux 4′ pour améliorer au maximum le maintien en place de ces derniers.

Quelle que soit la forme de réalisation retenue, les galettes 3 pourraient également être fabriquées en deux parties, le plan de coupe passant par les alésages 16 et 17 en étant parallèle aux faces 6 et 7. Après l'assemblage des deux parties pour former une galette complète, soit par collage ou par tout autre moyen adéquat, les alésages 16 et 17 se présenteraient comme dans une galette d'une seule pièce. Il est évidemment possible de prévoir pour les deux parties de galette des épaisseurs différentes, ce qui permettrait d'obtenir entre le fond des rainures de chaque grande face d'une galette assemblée trois distances différentes en combinant deux parties de galette de la plus faible épaisseur une partie de la plus faible épaisseur et une partie de la plus forte épaisseur ou deux parties de la plus forte épaisseur. Ces diverses possibilités pourraient avantageusement être exploitées dans le montage illustré à la figure 6, dans le but d'augmenter la distance entre barres de phases différentes. On pourrait également envisager de faire passer le plan de coupe en dehors du plan des alésages 16 et 17 tout en le maintenant parallèle aux faces 6 et 7. Dans ce cas, chacune des parties de galette serait traversée par un alésage 16 et par un alésage 17 et pourrait éventuellement être utilisée seule dans certains cas si on prévoit sur la face définie par le plan de coupe une denture correspondant à la denture des barreaux 4′ et des « mortaises » 35 pour recevoir les rebords des cavaliers 33.

Enfin, de manière à éviter le bruit engendré par la vibration des barres dans les rainures, les barres sont mises à serrage dans les rainures. Ce serrage peut, par exemple être obtenu, quand le matériau isolant des galettes est légèrement déformable, par de petites saillies prévues sur les bords des rainures, qui sont écrasées lors de l'introduction des barres dans les rainures.

## Revendications

1. Ensemble-support de barres d'un jeu de barres de transport d'énergie comprenant des éléments isolants assemblés avec les barres pour pincer les bords latéraux opposés desdites barres dans des rainures parallèles, caractérisé en ce que les éléments isolants sont chacun constitués par un bloc symétrique selon trois plans perpendiculaires, présentant sur deux de ses faces parallèles opposées (6, 7) des premier et deuxième groupes de rainures parallèles (12, 13), les rainures d'un même groupe étant de même profondeur, disposés à 90° l'un par rapport à l'autre et permettant d'enfourcher des barres (29) d'une première épaisseur dans le cas du premier groupe et d'une deuxième épaisseur dans le cas du deuxième groupe et traversé de part en part par des alésages d'assemblage (14, 15, 16 et 17) pratiqués dans ses plans de symétrie, perpendiculairement auxdits plans, les faces parallèles opposées portant les deux groupes de rainures étant percées de deux paires (14, 14, 15-15) des alésages d'assemblage, chacune des paires étant disposée de part et d'autre d'un groupe de rainures et les autres faces parallèles opposées étant percées d'un seul alésage central (16, 17).

2. Ensemble-support suivant la revendication 1, caractérisé en ce que les différentes faces des blocs sont entourées d'un épaulement (18) prévu pour empêcher tout déplacement latéral de pièces de liaison (4).

3. Ensemble-support suivant la revendication 1, caractérisé en ce que les différentes faces des blocs sont pourvues de mortaises (35) dans lesquelles viennent s'enfoncer des rebords (34) de cavaliers (33) d'assemblage de manière à empêcher tout déplacement latéral de pièces de liaison (4).

4. Ensemble-support suivant la revendication 1, caractérisé en ce que les différentes faces des blocs pouvant être en contact avec des pièces de liaison (4), les deux grandes faces des pièces de liaison (4) et les surfaces des cavaliers (33) en contact avec des pièces de liaison (4) sont garnies d'une denture ayant partout le même pas.

## Claims

1. Bar support assembly for a set of power transmission bars comprising insulator elements assembled with the bars to grip the opposite lateral edges of the said bars in parallel grooves, characterised in that the insulator elements each consist of a block symmetrical in three perpendicular planes, exhibiting on two of its opposite parallel faces (6, 7) a first and a second set of parallel grooves (12, 13), the grooves of one and the same set being of the same depth, arranged mutually at 90°, and permitting bars (29) of a first thickness in the case of the first set, and of a second thickness in the case of the second set, to be straddled, and fully penetrated by assembly bores (14, 15, 16 and 17) made in its planes of symmetry, at right angles to said planes, the opposite parallel faces bearing the two sets of grooves being pierced by two pairs (14, 14, 15-15) of the assembly bores, each of the pairs being arranged on either side of a set of grooves, and the other opposite parallel faces being pierced by a single central bore (16, 17).

2. Support assembly according to Claim 1, characterised in that the different faces of the blocks are surrounded by a shoulder (18) provided to prevent any lateral displacement of connecting pieces (4).

3. Support assembly according to Claim 1, characterised in that the different faces of the blocks are provided with mortises (35) in which edges (34) of assembly riders (33) are engaged so as to prevent any lateral displacement of connecting pieces (4).

4. Support assembly according to Claim 1, characterised in that whilst the different faces of the blocks may be in contact with the connecting pieces (4), the two major faces of the connecting pieces (4) and the surfaces of the riders (33) in contact with connecting pieces (4) are fitted with a tooth system having the same pitch in all places.

## Ansprüche

1. Halteanordnung für einen dem Energietransport dienenden Sammelschienensatz mit Isolationselementen, die mit den Sammelschienen so zusammengefügt sind, daß die gegenüberliegenden Ränder der Sammelschienen in parallelen Nuten festgehalten werden, dadurch gekennzeichnet, daß die Isolationselemente jeweils aus einem in drei zueinander senkrechten Ebenen symmetrischen Block bestehen, der an zwei seiner gegenüberliegenden, parallelen Seitenflächen mit ersten und zweiten Gruppen von parallelen Nuten (12, 13) versehen ist, wobei die zu einer Gruppe gehörigen Nuten die gleiche Tiefe haben, im Winkel von 90° zu den Nuten der anderen Gruppe verlaufen, im Fall der ersten Gruppe Sammelschienen (29) mit einer ersten Dicke und im Fall der zweiten Gruppe Sammelschienen (29) mit einer zweiten Dicke aufnehmen können und von Montagebohrungen (14, 15, 16, 17) durchdrungen sind, die in seinen Symmetrieebenen angeordnet sind und senkrecht zu den Ebenen verlaufen, und wobei die gegenüberliegenden, parallelen Flächen, die die zwei Gruppen von Nuten enthalten, von zwei Montagebohrungspaaren (14, 14 ; 15, 15) durchdrungen sind, von denen jedes beiderseits einer Gruppe von Nuten angebracht ist, während die anderen gegenüberliegenden parallelen Flächen von einer in der Mitte liegenden Bohrung (16, 17) durchdrungen sind.

2. Halteanordnung nach Anspruch 1, dadurch gekennzeichnet, daß die verschiedenen Flächen der Blöcke von einer Schulter (18) umgeben sind, die vorgesehen ist, um ein seitliches Verschieben von Verbindungsteilen (4) zu verhindern.

3. Halteanordnung nach Anspruch 1, dadurch gekennzeichnet, daß die verschiedenen Flächen der Blöcke mit Schlitzen (35) versehen sind, mit denen Randansätze (34) an Reitern (33) der Halteanordnung so in Eingriff kommen, daß eine seitliche Verschiebung von Verbindungsteilen (4) verhindert wird.

4. Halteanordnung nach Anspruch 1, dadurch gekennzeichnet, daß die verschiedenen Flächen der Blöcke, die mit Verbindungsteilen (4) in Kontakt kommen können, die zwei großen Flächen der Verbindungsteile (4) und die Flächen von Reitern (33), die mit den Verbindungsteilen (4) in Kontakt stehen, mit einer Zahnung ausgestattet sind, die überall die gleiche Teilung hat.

Fig. 1

Fig. 2

Fig. 3

Fig. 7

Fig. 6

Fig.4

Fig.5

4